# EUROPÄISCHE PATENTSCHRIFT

(11) **EP 0 521 029 B1**
(45) Veröffentlichungstag und Bekanntmachung des Hinweises auf die Patenterteilung: **01.06.1994**
(21) Anmeldenummer: 91905953.5
(22) Anmeldetag: 20.03.1991
(51) Int. Cl.: H01S 3/03, H01S 3/08, H01S 3/038

(54) **GASLASER**
GAS LASER
LASER A GAZ

(30) Priorität: 21.03.1990 DE 9003331 U
(43) Veröffentlichungstag der Anmeldung: 07.01.1993
(73) Patentinhaber: Rofin Sinar Laser GmbH, 22113 Hamburg (DE)
(72) Erfinder: MARTINEN, Hinrich, D-2057 Reinbeck (DE); HAGE, Hermann, D-2050 Hamburg 80 (DE)
(74) Vertreter: Fuchs, Franz-Josef, Dr.-Ing.
(86) Internationale Anmeldenummer: DE9100239
(87) Internationale Veröffentlichungsnummer: WO9115045

(56) Entgegenhaltungen:
- EP-A- 0 305 893
- Applied Physics Letters, Band 51, Nr. 7, 17. August 1987 (New York, NY, US) J.G. Xin et al.: "Compact, multipass, single transverse mode CO2 laser", Seiten 469-471.
- Applied Physics Letters, Band 54, Nr. 20, 15. Mai 1989 (New York, US) P.E. Jackson et al.: "CO2 large-area discharge laser using an unstable-waveguide hybrid resonator", Seiten 1950-1952.

## Beschreibung

Die Erfindung betrifft einen elektrisch angeregten Gaslaser mit zwei Elektroden, deren Abstand wesentlich geringer ist als ihre Längs- und Quererstreckung, die einen Entladungsraum zwischen sich einschließen und deren zum Entladungsraum gerichtete Flächen reflektierend sind, und mit zwei Resonatorspiegeln, die an den beiden Enden des Entladungsraums angeordnet sind.

Bei einem bekannten Laser dieser Art (EP-A-0 305 893) ist der Entladungsraum wesentlich weniger hoch als er breit oder lang ist. Dadurch besteht der Vorteil, daß Wärme großflächig von den Elektroden aufgenommen werden kann, von wo sie dann mit Hilfe geeigneter Kühlflüssigkeiten und dergleichen abgeführt werden kann. Es ist dann nicht mehr notwendig, das Lasergas mit einem besonderen Kühlkreislauf durch den Entladungsraum zu pumpen. Der Laser arbeitet dabei in Ebenen, die senkrecht zur Plattenerstreckung stehen und durch die beiden Resonatorspiegel hindurchgehen, als stabiler Resonator. In dieser Ebene hat der verhältnismäßig wenig hohe Entladungsraum mit seinen verspiegelten Grenzflächen (den Elektroden) die Eigenschaften eines optischen Wellenleiters. In der Breite, d.h. senkrecht zu dieser Richtung, hat der Entladungsraum aber die Eigenschaften nicht, da er seitlich nicht durch entsprechende Wände begrenzt ist und für Wellenleitereigenschaften eine viel zu große Breite aufweist. In dieser Ebene arbeitet der Resonator nun als instabiler Resonator, wobei das Licht nicht mehr in sich selbst zurückreflektiert wird, sondern bei verschiedenen Reflektionen nacheinander in Breitenrichtung wandert, bis es den Rand des einen Resonatorspiegels erreicht und den Resonator verläßt. Solche stabilen und instabilen Resonatoren sind nicht nur aus der eingangs genannten europäischen Patentveröffentlichung bekannt, sondern auch in der Literatur beschrieben (A Novel Stable-Unstable Resonator for Beam Control of Rare-Gas Halide Lasers von O.L. Bourne und P.E. Dyer, Optics Communications, Band 31, Nr. 2, Seiten 193 bis 196).

Laser der eingangs genannten Art haben zwar durchaus Vorteile. Die Nachteile bestehen aber einmal darin, daß diese Laser zur Erzielung höherer Leistungen nicht ohne weiteres vergrößert werden können, da die dann erforderlichen großen ebenen Flächen nicht mit der notwendigen Genauigkeit bearbeitet werden können. Außerdem sind solche großen Flächen nicht genügend formstabil, so daß die Wellenleitereigenschaften verlorengehen. Bei Hochfrequenzanregung kann man zwar die eine Elektrode erden. Es bereitet aber Schwierigkeiten, die andere großflächige Elektrode zuverlässig abzuschirmen, damit Hochfrequenz nicht in unerwünschter Weise nach außen dringen kann. Schließlich haben große Platten auch den Nachteil, daß sie sehr viel Platz benötigen.

Die Aufgabe der Erfindung besteht in der Schaffung eines Gaslasers der eingangs genannten Art, mit dem ohne großen konstruktiven Aufwand wesentlich höhere Laserleistungen erzielt werden können.

Die erfindungsgemäße Lösung besteht gemäß den im Anspruch 1 angegebenen Merkmalen darin, daß die Elektroden koaxiale Zylinder sind, daß sich die Schnittlinien des einen Resonatorspiegels mit Zylinderflächen, die mit den Elektroden koaxial sind, und/oder die Schnittlinien des anderen Resonatorspiegels mit den Zylinderflächen schräg zur Umfangsrichtung erstrecken, daß sich die Schnittlinien der Resonatorspiegel mit Axialebenen der Elektroden im wesentlichen senkrecht zur Achse erstrecken, und daß der andere Resonatorspiegel sich nur über einen Teil des Umfangs des Entladungsraums erstreckt.

Es wird erfindungsgemäß vom ebenen Entladungsraum mit ebenen Elektroden abgegangen. Die koaxialen Elektroden haben einmal den Vorteil, daß sie auch bei großen Abmessungen formstabiler sind als ebene Flächen. Auch die notwendige genaue Bearbeitung um einen guten Wellenleiter zu erhalten, ist bei zylindrischen Elektroden leichter. Wird die äußere Elektrode geerdet und die Hochfrequenz an die innere Elektrode angelegt, so dient die äußere Elektrode als Abschirmung. Die Abschirmungsprobleme werden also vereinfacht. Schließlich zeichnet sich die Anordnung der Erfindung auch durch einen kompakteren Aufbau aus.

Dadurch, daß die Schnittlinien des einen Resonatorspiegels mit Zylinderflächen, die mit den Elektroden koaxial sind, und/oder die Schnittlinien des anderen Resonatorspiegels mit den Zylinderflächen allgemein schräg zur Umfangsrichtung, z.B. als Teil einer Schraubenlinie, verlaufen, wird der Laserstrahl beim instabilen Mode bei jeder Reflektion in Umfangsrichtung versetzt, bis er am Rand des anderen Resonatorspiegels austritt. Da sich andererseits die Schnittlinien der Resonatspiegel mit Axialebenen der Elektroden im wesentlichen senkrecht zur Achse erstrecken, liegt in diesen Ebenen ein stabiler Mode vor.

Was Form und Anordnung der Spiegel betrifft, so können diese am besten dadurch erläutert werden, indem man Entladungsraum und Spiegel sich in eine Ebene abgerollt denkt. In diesem Falle hat man dann gewisse Analogien mit den vorbekannten ebenen Lasern. Die Erfindung erschöpft sich aber keinesfalls darin, diese vorbekannten ebenen Laser praktisch zylindrisch aufgerollt" zu haben. Würde man nämlich einen solchen ebenen Laser "aufrollen", so würde die ebene Wellenleitergeometrie mit zwei voneinander völlig unabhängigen Richtungen (der Ebene, in der ein Wellenleiter vorliegt und der dazu senkrechten Richtung in der Breite) wegfallen. Da der bekannte ebene Entladungsraum eine endliche Dicke hat, würde er beim Aufrollen" deformiert, d.h. daß vorher parallele Linien, die senkrecht zu den plattenoberflächen stehen, nunmehr in ihrer Verlängerung auf der Achse der koaxialen Anordnung zusammentreffen. Man würde daher erwarten, daß die Unabhängigkeit des stabilen vom instabilen Mode in den zwei zueinander senkrechten Richtungen nicht mehr gegeben ist. Ob dies nun der Fall ist oder nicht, konnte theoretisch noch nicht ganz geklärt werden. Auf jeden Fall tritt aber das überraschende Ergebnis ein, daß mit dem erfindungsgemäßen Laser im Prinzip eine gleich große Leistungsdichte erreicht werden kann, wobei dann die Ausgangsleistung des Lasers dadurch größer gemacht werden kann als bei den ebenen Entladungsräumen, weil wie erwähnt die koaxialen Elektroden besser und genauer mit wesentlich größeren Abmessungen hergestellt werden können.

Wenn die Schnittlinien des einen (in Umfangsrichtung nicht unterbrochenen) Resonatorspiegels mit den Zylinderflächen schräg zur Umfangsrichtung verlaufen, so weisen diese Schnittlinien eine Stufe auf.

Die Schnittlinien der Spiegel mit den Zylinderflächen, die mit den Elektroden koaxial sind, können in diesen Flächen eine zum Entladungsraum gerichtete Krümmung (konkave Spiegel) oder eine von diesem Entladungsraum weggerichtete Krümmung (konvexe Spiegel) haben. Es ist aber auch möglich, auf eine solche Krümmung zu verzichten, so daß dann die Schnittlinien schraubenlinienförmig bzw. in der abgewickelten Zylindermantelfläche eine Gerade wären. Die verschiedenen Möglichkeiten entsprechen hierbei den verschiedenen für den instabilen Mode bei ebenen Entladungsräumen bekannten Möglichkeiten (Unstable Optical Resonators von A. E. Siegman, Applied Optics, 1974, Band 13, Nr. 2, Seiten 353 bis 367).

In den Axialebenen können diese Schnittlinien entweder gerade oder so gekrümmt sein, daß die Krümmungen zum Entladungsraum gerichtet sind (konkave Spiegel). Dies entspricht der nicht vorhandenen Krümmung bzw. fokussierenden Krümmung des stabilen Modes.

Zweckmäßigerweise beträgt die Dicke des Entladungsraums weniger als 1 cm, da bei größeren Abmessungen die Wellenleitereigenschaften verlorengehen. Der Innendurchmesser der äußeren Elektrode beträgt zweckmäßigerweise mindestens 3 cm. Die Länge der Elektroden beträgt vorteilhafterweise mindestens 10 cm.

Die Elektroden müssen gute Wellenleitereigenschaften aufweisen. Dies kann durch Polieren der metallischen Oberfläche der Elektroden erreicht werden. Bei einer zweckmäßigen Ausführungsform sind die Elektroden an den zum Entladungsraum gerichteten Flächen mit einem reflektierenden dielektrischen Überzug versehen. Zweckmäßige Dielektrika sind z.B. Al₂O₃ oder andere bekannte Materialien. Man könnte auch die Elektroden aus einem Dielektrikum herstellen und nur mit einer metallischen Beschichtung versehen.

Zweckmäßigerweise sind die Elektroden mit Kanälen für ein Kühlmedium versehen. So könnte die innere Elektrode z.B. von destilliertem Wasser durchströmt werden.

Da der Strahl bei Austritt aus dem Laser in zwei zueinander senkrechten Richtungen unterschiedliche Divergenzen hat, wird zweckmäßigerweise vorgesehen, daß am Austrittsort der Laserstrahlung eine im wesentlichen zylindrische Optik vorgesehen ist, damit die Divergenzen in beiden zueinander senkrechten Richtungen angepaßt werden können, damit der Strahl hinterher sehr gut fokussiert werden kann.

Als anzuregendes Lasergas könnten z.B. Edelgas-Halogenid-Gase oder aber CO oder CO₂ verwendet werden, deren im üblichen Mischungsverhältnis He und N₂ beigemischt werden, wobei in der Mischung auch noch ein kleiner Anteil Xe enthalten sein kann. Die Anregung des Gases kann durch Einkopplung von Hochfrequenz im Bereich von einigen MHz bis einigen GHz erfolgen, insbesondere im Bereich von 40 bis 500 MHz. Das Gas weist zweckmäßigerweise einen Druck auf, der niedriger ist als Atmosphärendruck, zweckmäßigerweise zwischen 50 mbar und 500 mbar, obwohl Abweichungen von diesem Druckbereich auch möglich sind.

Die Erfindung wird im folgenden anhand einer vorteilhaften Ausführungsform beschrieben, die das Prinzip der Erfindung in schematischer Darstellung zeigt. Es zeigen:
- Fig. 1: einen axialen Querschnitt durch einen Laser der Erfindung;
- Fig. 2: einen axialen Querschnitt durch einen Entladungsraum entlang der Linie II-II von Fig. 3;
- Fig. 3: eine "Abrollung" des Entladungsraums; und
- Fig. 4: eine perspektivische Darstellung des austretenden Laserstrahls.

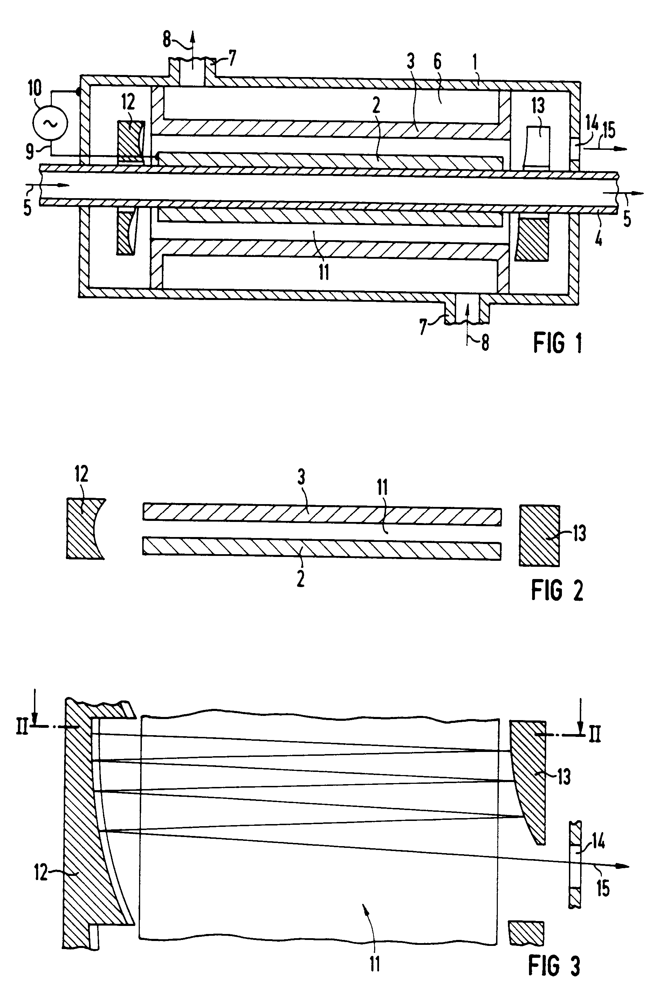

Wie dies in Fig. 1 dargestellt ist, sind in einem Gehäuse 1 koaxial zueinander zwei zylindrische Elektroden 2 und 3 angeordnet. Die innere Elektrode 2 befindet sich dabei auf eine. Rohr 4, das in Richtung der Pfeile 5 von einem Kühlmedium, insbesondere destilliertem Wasser durchströmt und dadurch sehr gut gekühlt wird. Die äußere Elektrode 3 ist am Gehäuse 1 befestigt und schließt zwischen sich und dem Gehäuse 1 einen Raum 6 ein, der durch Einlaß- und Auslaßstutzen 7 in Richtung der Pfeile 8 ebenfalls von einem Kühlmedium, z.B. Wasser durchströmt ist. Die äußere Elektrode 3 ist über das Gehäuse 1 geerdet, während die innere Elektrode 2 über eine Leitung 9 mit einem Hochfrequenzgenerator 10 über nicht gezeigte Anpassungsschaltelemente verbunden ist. Die aufeinander zugerichteten Oberflächen der metallischen Elektroden 2 und 3 sind sehr genau gearbeitet und poliert. Sie schließen zwischen sich einen Entladungsraum 11 ein, der normalerweise eine Dicke von nur wenigen Millimetern aufweist. An beiden axialen Enden dieses Entladungsraumes sind Resonatorspiegel 12, 13 vorgesehen, die nun im Zusammenhang mit den Fig. 2 und 3 deutlicher beschrieben werden sollen.

In Fig. 2 ist im wesentlichen der Axialschnitt der Fig. 1, und zwar der untere Teil gezeigt, wenn auch in etwas größerem Maßstab. In dieser Ebene ist der linke Resonatorspiegel 12 konkav gekrümmt, während der rechte Resonatorspiegel 13 eben ist. Genauer gesagt haben die Schnittlinien der Spiegel 12, 13 mit der Axialebene diese Form. In dieser Ebene kann sich ein stabiler Mode ausbilden.

In der dazu senkrechten Richtung, die in Fig. 3 abgerollt dargestellt ist, ist der Entladungsraum nicht begrenzt. In dieser abgerollten Ebene haben die Spiegel 12 und 13 konkave bzw. konvexe Form, wobei die Krümmungsmittelpunkte versetzt angeordnet sind, so daß ein auf einen Spiegel treffender Strahl nicht in sich selbst reflektiert wird, sondern zickzackmäßig zum Rand des Spiegels 13 wandert. Bei diesem instabilen Mode verläßt der Strahl dann am Rand des Spiegels 13 den Laser und tritt durch das Austrittsfenster 14 in Richtung des Pfeiles 15 aus.

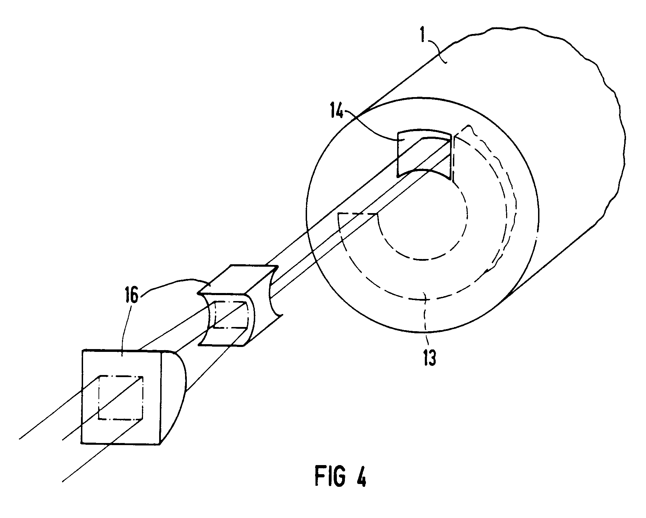

Der Laserstrahl hat dabei, wie dies in Fig. 4 gezeigt ist, in den beiden zueinander senkrechten Richtungen (Umfangsrichtung und Radialrichtung) unterschiedliche Divergenzen. Der Strahl wird dann in einer Richtung durch eine axiale Optik 16 aufgeweitet, so daß er in beiden zueinander senkrechten Richtungen die gleiche Divergenz aufweist und anschließend gut fokussiert werden kann.

## Patentansprüche

1. Elektrisch angeregter Gaslaser mit folgenden Merkmalen:
a) Ein Entladungsraum (11) ist zwischen zwei koaxialen hohlzylindrischen Elektroden (2, 3) angeordnet, deren Abstand wesentlich geringer ist als ihre Längs- und Quererstreckung und deren zum Entladungsraum gerichtete Flächen reflektierend sind,
b) der Entladungsraum (11) ist an seinen Enden jeweils mit einem Resonatorspiegel (12, 13) versehen,
c) die Schnittlinie wenigstens eines der Resonatorspiegel (12, 13) mit einer zu den Elektroden (2, 3) koaxialen Zylinderfläche erstreckt sich schräg zur Umfangsrichtung,
d) die Schnittlinien der Resonatorspiegel (12, 13) mit einer Axialebene der Elektroden (2, 3) verlaufen im wesentlichen senkrecht zur Achse, und
e) wenigstens ein Resonatorspiegel (13) erstreckt sich nur über einen Teil des Umfangs des Entladungsraumes (11).

2. Gaslaser nach Anspruch 1, **dadurch gekenn****zeichnet**, daß die Schnittlinien eines der Resonatorspiegel (12) mit den Zylinderflächen eine Stufe aufweisen, und sich auf beiden Seiten der Stufe allgemein schräg zur Umfangsrichtung erstrecken.

3. Gaslaser nach Anspruch 1 oder 2, **dadurch ge****kennzeichnet**, daß sich die Schnittlinien eines der Resonatorspiegel (12) mit den Zylinderflächen auf beiden Seiten der Stufe mit einer zum Entladungsraum (11) gerichteten Krümmung mit in Umfangsrichtung versetzten Krümmungsmittelpunkten erstrecken.

4. Gaslaser nach Anspruch 1 oder 2, **dadurch ge****kennzeichnet,** daß sich die Schnittlinien eines der Resonatorspiegel (12) mit den Zylinderflächen auf beiden Seiten der Stufe mit einer vom Entladungsraum (11) weg gerichteten Krümmung mit in Umfangsrichtung versetzten Krümmungsmittelpunkten erstrecken.

5. Gaslaser nach einem der Ansprüche 1 bis 4, **da****durch gekennzeichnet**, daß die Schnittlinien des anderen Resonatorspiegels (13) mit den Zylinderflächen eine vom Entladungsraum (11) weg gerichtete Krümmung mit in Umfangsrichtung versetzten Krümmungsmittelpunkten aufweisen.

6. Gaslaser nach einem der Ansprüche 1 bis 4, **da****durch gekennzeichnet**, daß **d**ie Schnittlinien des anderen Resonatorspiegels (13) mit den Zylinderflächen eine zum Entladungsraum (11) gerichtete Krümmung mit in Umfangsrichtung versetzten Krümmungsmittelpunkten aufweisen.

7. Gaslaser nach einem der Ansprüche 1 bis 6, **da****durch gekennzeichnet,** daß mindestens einer der Resonatorspiegel (12, 13) mit Axialebenen der Elektroden (2, 3) Schnittlinien bildet, die gerade sind und senkrecht zur Achse stehen.

8. Gaslaser nach einem der Ansprüche 1 bis 7, **da****durch gekennzeichnet**, daß der eine Resonatorspiegel (12) mit Axialebenen der Elektroden (2, 3) Schnittlinien bildet, die eine zum Entladungsraum (11) gerichtete Krümmung mit Krümmungsmittelpunkten aufweisen, die in der Mitte des Entladungsraums (11) zwischen den einander gegenüberstehenden Elektroden (2, 3) angeordnet sind.

9. Gaslaser nach einem der Ansprüche 1 bis 8, **da****durch gekennzeichnet**, daß der andere Resonatorspiegel (13) mit Axialebenen der Elektroden (2, 3) Schnittlinien bildet, die eine zum Entladungsraum (11) gerichtete Krümmung mit Krümmungsmittelpunkten aufweisen, die in der Mitte des Entladungsraums (11) zwischen den einander gegenüberstehenden Elektroden (2, 3) angeordnet sind.

10. Gaslaser nach einem der Ansprüche 1 bis 9, **da****durch gekennzeichnet**, daß die Dicke des Entladungsraums (11) weniger als 1 cm beträgt.

11. Gaslaser nach einem der Ansprüche 1 bis 10, **da****durch gekennzeichnet**, daß der Innendurchmesser der äußeren Elektrode (3) mindestens 3 cm beträgt.

12. Gaslaser nach einem der Ansprüche 1 bis 11, **da****durch gekennzeichnet**, daß die Länge der Elektroden (2, 3) mindestens 10 cm beträgt.

13. Gaslaser nach einem der Ansprüche 1 bis 12, **da****durch gekennzeichnet**, daß die Elektroden (2, 3) an den zum Entladungsraum (11) gerichteten Flächen mit einem reflektierenden dielektrischen Überzug versehen sind.

14. Gaslaser nach einem der Ansprüche 1 bis 13, **da****durch gekennzeichnet,** daß die Elektroden (2, 3) mit Kanälen (4, 6) für ein Kühlmedium versehen sind.

15. Gaslaser nach einem der Ansprüche 1 bis 14, **da****durch gekennzeichnet**, daß er am Austrittsort der Laserstrahlung (15) eine im wesentlichen zylindrische Optik (16) aufweist.

## Claims

1. An electrically excited gas laser having the following features:
a) a discharge space (11) is arranged between two coaxial hollow cylindrical electrodes (2, 3) having a spacing which is substantially smaller than their longitudinal and lateral extent, and having surfaces directed towards the discharge space which are reflective,
b) the discharge space (11) is provided at each end with a resonator mirror (12, 13),
c) the line of intersection between at least one of the resonator mirrors (12, 13) and a cylindrical surface coaxial with the electrodes (2, 3) extends obliquely relative to the circumferential direction,
d) the lines of intersection between the resonator mirrors (12, 13) and an axial plane of the electrodes (2, 3) extend substantially perpendicularly relative to the axis, and
e) at least one resonator mirror (13) extends over only part of the circumference of the discharge space (11).

2. A gas laser according to claim 1, characterised in that the lines of intersection between one of the resonator mirrors (12) and the cylindrical surfaces have a step and extend on both sides of the step generally obliquely relative to the circumferential direction.

3. A gas laser according to claim 1 or 2, characterised in that the lines of intersection between one of the resonator mirrors (12) and the cylindrical surfaces extend on both sides of the step with a curvature orientated towards the discharge space (11), this curvature having centres of curvature offset in the circumferential direction.

4. A gas laser according to claim 1 or 2, characterised in that the lines of intersection between one of the resonator mirrors (12) and the cylindrical surfaces extend on both sides of the step with a curvature oriented away from the discharge space (11), this curvature having centres of curvature offset in the circumferential direction.

5. A gas laser according to one of claims 1 to 4, characterised in that the lines of intersection between the other resonator mirror (13) and the cylindrical surfaces have a curvature orientated away from the discharge space (11), this curvature having centres of curvature offset in the circumferential direction.

6. A gas laser according to one of claims 1 to 4, characterised in that the lines of intersection between the other resonator mirror (13) and the cylindrical surfaces have a curvature oriented towards the discharge space (11), this curvature having centres of curvature offset in the circumferential direction.

7. A gas laser according to one of claims 1 to 6, characterised in that at least one of the resonator mirrors (12, 13) forms lines of intersection with axial planes of the electrodes (2, 3), which lines of intersection are straight and perpendicular relative to the axis.

8. A gas laser according to one of claims 1 to 7, characterised in that one resonator mirror (12) forms lines of intersection with axial planes of the electrodes (2, 3), which lines of intersection have a curvature oriented towards the discharge space (11), this curvature having centres of curvature which are arranged in the middle of the discharge space (11) between the mutually opposed electrodes (2, 3).

9. A gas laser according to one of claims 1 to 8, characterised in that the other resonator mirror (13) forms lines of intersection with axial planes of the electrodes (2, 3), which lines of intersection have a curvature oriented towards the discharge space (11), this curvature having centres of curvature which are arranged in the middle of the discharge space (11) between the mutually opposed electrodes (2, 3).

10. A gas laser according to one of claims 1 to 9, characterised in that the thickness of the discharge space (11) is less than 1 cm.

11. A gas laser according to one of claims 1 to 10, characterised in that the inside diameter of the outer electrode (3) is at least 3 cm.

12. A gas laser according to one of claims 1 to 11, characterised in that the length of the electrodes (2, 3) is at least 10 cm.

13. A gas laser according to one of claims 1 to 12, characterised in that the electrodes (2, 3) are provided with a reflective dielectric coating on the surfaces oriented towards the discharge space (11).

14. A gas laser according to one of claims 1 to 13, characterised in that the electrodes (2, 3) are provided with conduits (4, 6) for a coolant.

15. A gas laser according to one of claims 1 to 14, characterised in that it has a substantially cylindrical optical system (16) at the exit location of the laser beam (15).

## Revendications

1. Laser à gaz à excitation électrique, comportant les particularités suivantes :
a) une chambre à décharge (11) est ménagée entre deux électrodes (2, 3) cylindriques creuses et coaxiales, dont l'écartement est notablement plus petit que leurs extensions longitudinale et transversale, et dont les surfaces dirigées vers la chambre à décharge sont réfléchissantes,
b) la chambre à décharge (11) est munie, à chacune de ses extrémités, d'un miroir formant résonateur (12, 13),
c) l'intersection entre au moins l'un des miroirs formant résonateur (12, 13) et une surface cylindrique coaxiale aux électrodes (2,3), s'étend obliquement par rapport à la direction périphérique,
d) les intersections entre les miroirs formant résonateur (12, 13) et un plan axial des électrodes (2, 3), s'étendent pour l'essentiel perpendiculairement à l'axe, et
e) au moins un miroir formant résonateur (13) ne s'étend que sur une partie de la périphérie de la chambre à décharge (11).

2. Laser à gaz suivant la revendication 1, caractérisé en ce que les intersections entre l'un des miroirs formant résonateur (12) et les surfaces cylindriques, présentent un palier et s'étendent de part et d'autre de ce dernier à peu près obliquement par rapport à la direction périphérique.

3. Laser à gaz suivant la revendication 1 ou 2, caractérisé en ce que les intersections entre l'un des miroirs formant résonateur (12) et les surfaces cylindriques, s'étendent des deux côtés du palier avec une courbure dirigée vers la chambre à décharge (11) et présentant des centres de courbure décalés dans la direction périphérique.

4. Laser à gaz suivant la revendication 1 ou 2, caractérisé en ce que les intersections entre l'un des miroirs formant résonateur (12) et les surfaces cylindriques, s'étendent des deux côtés du palier, avec une courbure qui s'éloigne de la chambre à décharge (11) et qui présente des centres de courbure décalés dans la direction périphérique.

5. Laser à gaz suivant l'une des revendications 1 à 4, caractérisé en ce que les intersections entre l'autre miroir formant résonateur (13) et les surfaces cylindriques, présentent une courbure qui s'éloigne de la chambre à décharge (11) ayant des centres de courbure décalés dans la direction périphérique.

6. Laser à gaz suivant l'une des revendications 1 à 4, caractérisé en ce que les intersections entre l'autre miroir formant résonateur (11) et les surfaces cylindriques, représentent une courbure dirigée vers la chambre à décharge (11), ayant des centres de courbure décalés dans la direction périphérique.

7. Laser à gaz suivant l'une des revendications 1 à 6, caractérisé en ce qu'au moins l'un des miroirs formant résonateur (12, 13) forme, avec des plans axiaux des électrodes (2,3), des intersections qui sont droites et qui sont perpendiculaires à l'axe.

8. Laser à gaz suivant l'une des revendications 1 à 7, caractérisé en ce que l'un des miroirs formant résonateur (12) forme, avec des plans axiaux des électrodes (2, 3), des intersections qui présentent une courbure dirigée vers la chambre à décharge (11), comportant des centres de courbure qui sont situés au milieu de la chambre à décharge (11), entre les électrodes (2, 3) disposées l'une en face de l'autre.

9. Laser à gaz suivant l'une des revendications 1 à 8, caractérisé en ce que l'autre miroir formant résonateur (13) forme, avec des plans axiaux des électrodes (2, 3), des intersections qui présentent une courbure dirigée vers la chambre à décharge (11) et présentant des centres de courbure qui sont disposés au milieu de la chambre à décharge (11), entre les électrodes disposées l'une en face de l'autre (2, 3).

10. Laser à gaz suivant l'une des revendications 1 à 9, caractérisé en ce que l'épaisseur de la chambre à décharge (11) est inférieure à 1 cm.

11. Laser à gaz suivant l'une des revendications 1 à 10, caractérisé en ce que le diamètre intérieur de l'électrode extérieure (3) est au moins de 3 cm.

12. Laser à gaz suivant l'une des revendications 1 à 11, caractérisé en ce que la longueur des électrodes (2, 3) est au moins de 10 cm.

13. Laser à gaz suivant l'une des revendications 1 à 12, caractérisé en ce que les électrodes (2,3) sont munies, sur leur surface dirigée vers la chambre à décharge (11), d'un revêtement diélectrique réfléchissant.

14. Laser à gaz suivant l'une des revendications 1 à 13, caractérisé en ce que les électrodes (2, 3) sont munies de canaux (4, 6) pour un milieu de refroidissement.

15. Laser à gaz suivant l'une des revendications 1 à 14, caractérisé en ce qu'il comporte, à l'emplacement de sortie du rayonnement laser (15), une optique (16) essentiellement cylindrique.
